Europäisches Patentamt

European Patent Office

Office européen des brevets

(19)

(11) **EP 1 242 739 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(21) Anmeldenummer: **00991107.4**

(22) Anmeldetag: **20.12.2000**

(51) Int Cl.:
*F02D 41/22* *(2006.01)*    *F02D 41/18* *(2006.01)*

(86) Internationale Anmeldenummer:
**PCT/DE2000/004556**

(87) Internationale Veröffentlichungsnummer:
**WO 2001/046579 (28.06.2001 Gazette 2001/26)**

(54) **VERFAHREN ZUR ERKENNUNG EINER FEHLFUNKTION BEI EINEM SENSOR**

METHOD FOR DETECTING MALFUNCTIONING IN A SENSOR

PROCEDE DE RECONNAISSANCE DU FONCTIONNEMENT DEFECTUEUX D'UN CAPTEUR

(84) Benannte Vertragsstaaten:
**DE FR GB**

(30) Priorität: **22.12.1999 DE 19961944**

(43) Veröffentlichungstag der Anmeldung:
**25.09.2002 Patentblatt 2002/39**

(73) Patentinhaber: **ROBERT BOSCH GMBH**
**70442 Stuttgart (DE)**

(72) Erfinder:
• **HARTZ, Martin**
**23558 Lübeck (DE)**

• **STROHRMANN, Manfred**
**76137 Karlsruhe (DE)**
• **STRAUB, Detlev**
**70499 Stuttgart 1 (DE)**
• **HAMMEL, Christof**
**70188 Stuttgart (DE)**
• **BIESTER, Juergen**
**71034 Boeblingen (DE)**
• **SCHULZ, Udo**
**71665 Vaihingen/Enz (DE)**

(56) Entgegenhaltungen:
EP-A- 0 778 406        DE-A- 4 038 337
GB-A- 2 285 145        US-A- 4 483 299
US-A- 5 617 337

EP 1 242 739 B1

**Beschreibung**

Die Erfindung geht aus von einem Verfahren zur Erkennung einer Fehlfunktion bei einem Sensor nach der Gattung des Hauptanspruchs.

Stand der Technik

Es ist bekannt, daß Sensoren, die eine für die Regelung von Brennkraftmaschinen wesentliche Meßgröße, beispielsweise die von der Brennkraftmaschine angesaugte Luft, erfassen, auf ihre Funktionsfähigkeit hin überwacht werden müssen, damit Fehlfunktionen sicher erkannt werden. Eine Möglichkeit, eine Fehlfunktion zu erkennen, besteht beispielsweise darin, einen sogenannten Signal-Range-Check durchzuführen. Bei einem solchen Signal-Range-Check bzw. einer Signalgrößenanalyse wird das Ausgangssignal des Sensors daraufhin überwacht, ob es in einem plausiblen Bereich liegt. Ein Signal-Range-Check kann beispielsweise so durchgeführt werden, daß das Ausgangssignal eines Sensors daraufhin überwacht wird, ob es zwischen einer oberen und einer unteren Grenze liegt. Überschreitet es die obere Grenze oder unterschreitet es die untere Grenze, wird eine Fehlfunktion erkannt und angezeigt.

Eine Sensorüberwachung mit Hilfe eines Signal-Range-Checks für einen Luftmassenmesser bei einer Brennkraftmaschine ist beispielsweise aus der Druckschrift EP 0 778 406 A2 bekannt. Bei diesen bekannten Fehlererkennungsverfahren wird nicht nur ein Signal-Range-Check mit festen Grenzen durchgeführt, sondern es wird ein zulässiger Bereich für das Ausgangssignal des Luftmassenmessers bestimmt, der abhängig ist vom Öffnungswinkel der Drosselklappe. Mit steigendem Drosselklappenwinkel wird auch die für plausibel erachtete Ausgangsspannung des Luftmassenmessers größer. Liegt das Ausgangssignal außerhalb des plausiblen Bereiches wird ein Fehler erkannt und das Ausgangssignal wird bei der weiteren Signalauswertung nicht mehr berücksichtigt.

Vorteile der Erfindung

Das erfindungsgemäße Verfahren zur Erkennung einer Fehlfunktion bei einem Sensor hat gegenüber dem bekannten Verfahren den Vorteil, daß die Erkennung der Fehlfunktion noch zuverlässiger ist und daß zusätzlich eine vorteilhafte Signalauswertung ermöglicht wird. Erzielt wird dieser Vorteil mit den Merkmalen gemäss Anspruch 1 Überprüfung weiterverarbeitet bzw. zur Bestimmung der Meßgröße verwendet.

Weitere Vorteile der Erfindung werden durch die in den Unteransprüchen angegebenen Maßnahmen erzielt.

Dabei läßt sich das erfindungsgemäße Verfahren zur Erkennung einer Fehlfunktion eines Sensors besonders vorteilhaft in Verbindung mit einem Motorsteuersystem einsetzen, bei dem das Ausgangssignal verschiedener Sensoren im Motorsteuergerät weiterverarbeitet wird zur Bestimmung einer bestimmten Meßgröße und damit auch zur Berechnung der Ansteuersignale für den Motorbetrieb. Das erfindungsgemäße wird Verfahren dabei in Verbindung mit der Auswertung des Ausgangssignales eines Heißfilmluftmassenmessers durchgeführt, der die von einem Motor angesaugte Luftmasse ermittelt und sein Ausgangssignal dem Steuergerät zur Verfügung stellt. Die Überprüfung des Ausgangssignales des Luftmassenmessers mittels eines Signal-Range-Checks wird dann vorteilhafterweise nur in einem vorgebbaren Teilbetriebsbereich des Motors durchgeführt, außerhalb dieses Betriebsbereiches des Motors wird das Ausgangssignal des Luftmassenmessers weiterhin ausgewertet. Da dieses Signal in den meisten Fällen korrekt ist, kann gegenüber Systemen, die in solchen Fällen auf Ersatzwerte umschalten, eine deutliche Emissionsreduktion erzielt werden.

Die Anmeldung betrifft auch eine Vorrichtung gemäss Anspruch 14 zur Durchführung des Verfahrens.

In weiteren vorteilhaftenr Ausgestaltungen werden die erfindungsgemäßen Verfahren noch durch eine Onboard-Diagnose (OBD) ergänzt, die im Motorsteuergerät bzw. im Steuergerät der Brennkraftmaschine abläuft und wenigstens Plausibilitätsuntersuchungen der Offsetdrift und der Drift der Empfindlichkeit des eingesetzten Sensors oder der eingesetzten Sensoren umfaßt und die vorteilhafterweise bei Motorstillstand ablaufen.

Zeichnung

Ausführungsbeispiele der Erfindung sind in der Zeichnung dargestellt und werden in der nachfolgenden Beschreibung näher erläutert. Im einzelnen zeigt Figur 1 ein Ausführungsbeispiel zur Durchführung eines Verfahrens zur Überwachung des Ausgangssignales eines Luftmassenmessers, das beispielsweise in einem Motorsteuergerät abläuft und einen Signal-Range-Check sowie verschiedene Plausibilitätsuntersuchungen ermöglicht. In Figur 2 ist eine Anordnung logischer Verknüpfungen angegeben, die verschiedene Bedingungen für Fehlererkennungen wiedergibt und in Figur 3 ist für eine Motorsteuerung dargestellt, in welchem Bereich der Meßgröße ein Signal-Range-Check durchgeführt werden kann und in welchem Bereich nicht, wobei die Abgrenzung zwischen den Bereichen in Abhängigkeit von der Drehzahl der Brennkraftmaschine dargestellt ist.

Beschreibung

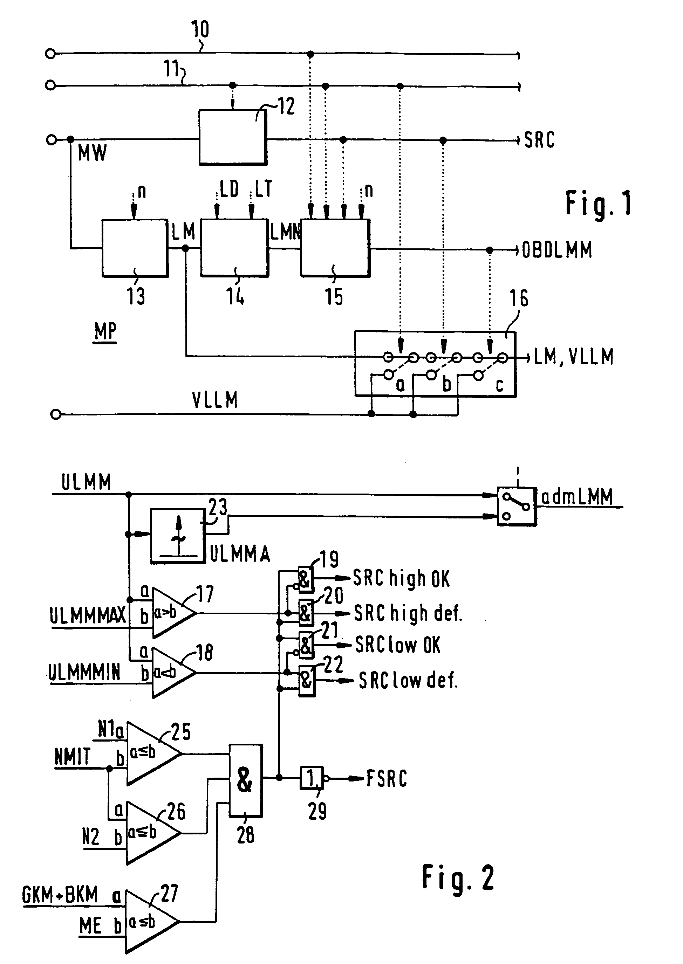

In Figur 1 ist ein Ausführungsbeispiel der Erfindung dargestellt, das ausgeht von einem Heißfilmluftmassenmesser, der den von einer Brennkraftmaschine angesaugten Luftmassenstrom als Meßgröße erfaßt. Die Brennkraftmaschine weist dabei alle erfindungsgemäß benötigten Komponenten, die in der Zeichnung nicht dargestellt sind, auf.
Der Heißfilmluftmassenmesser gibt eine analoge Ausgangsspannung ab, deren Höhe von der im Ansaugrohr der Brennkraftmaschine bzw. des Motors strömenden Luftmasse abhängt und als Meßwert MW bezeichnet wird. Das (in der Zeichnung nicht dargestellte) Sensorelement ist zusammen mit der Auswerteschaltung im Ansaugrohr der Brennkraftmaschine montiert. Zur Erfassung des Luftstromes wird auf dem Sensorelement eine Sensormembran über einen zentral angeordneten Heizwiderstand beheizt. Die Temperaturverteilung auf der Membran wird von zwei Temperaturwiderständen, die symmetrisch zum Heizwiderstand aufgebracht sind, erfaßt. Ein über den Sensor strömender Luftstrom verändert die Temperaturverteilung der Membran, dies führt zu einer Widerstandsdifferenz zwischen dem stromaufwärts und dem stromabwärts liegenden Temperaturwiderstand. Die Widerstandsdifferenz ist richtungs- und betragsabhängig, so daß ein solcher Luftmassenmesser gleichzeitig Betrag und Richtung eines Luftmassenstromes registrieren kann. Aufgrund der geringen Abmessungen des mikromechanischen Sensorelements wird eine geringe Ansprechzeit erhalten. Der Sensor ist also ein sogenannter ratiometrischer Sensor.
Das Ausgangssignal des Luftmassenmessers wird in einem Mikroprozessor MP weiterverarbeitet. Dieser Mikroprozessor ist üblicherweise Bestandteil des Steuergerätes der Brennkraftmaschine, er kann aber in einer Variante der Erfindung auch direkt zum Sensor gehören. Im Mikroprozessor laufen wie nachstehend beschriebenen, verschiedene Plausibilitätsuntersuchungen bzw. Fehlererkennungen ab. Dazu greift das Steuergerät der Brennkraftmaschine bzw. der Mikroprozessor auf die benötigten Informationen zu. Dem Steuergerät werden alle für den Betrieb der Brennkraftmaschine benötigten Größen bzw. Informationen zugeführt, wobei sie beispielsweise mit Hilfe von Sensoren gewonnen werden. Dazu gehören auch die in nachfolgenden Teilen der Beschreibung erwähnten Größen, die zur Durchführung der erfindungsgemäßen Verfahren benötigt werden.
Erfindungsgemäß wird das Luftmassensignal gemäß der in Figur 1 dargestellten Blockschaltung im Steuergerät auf seine Gültigkeit hin geprüft. Der Luftmassenmesser kann pulsierende Luftmassenströme erfassen und verfügt über keine feste untere bzw. obere Spannungsgrenzen. Deshalb kann der Luftmassenmesser Ausgangssignale liefern, die bis an seine Versorgungsspannung reichen. Damit auch durch die Pulsationen keine Fehler bei der Ermittlung des Luftmassenstromes auftreten, muß auch der gemittelte Luftmassenstrom auf seine Gültigkeit hin überprüft werden. Betriebsbereiche der Brennkraftmaschine, in denen eine Auswertung der Ausgangssignale des Luftmassenmessers problematisch ist, sollten bei der Durchführung des Signal-Range-Checks ausgeklammert werden.
In Figur 1 sind verschiedene Fehlererkennungen bzw. Fehlerpfade sowie Plausibilitätsuntersuchungen aufgetragen, die im Mikroprozessor MP zur Überprüfung der Funktionsfähigkeit der einzelnen Komponenten ablaufen. Dabei bezeichnet 10 den Fehlerpfad des Luftsystems und 11 den Fehlerpfad Signal-Range-Check Referenzspannung, bei dem die Referenzspannung für den Sensor auf plausible Werte überprüft wird. Mit 12 ist der Signal-Range-Check für das Ausgangssignal des Luftmassenmessers bezeichnet, dem als Eingangsgröße der Meßwert MW für den Luftmassenstrom zugeführt wird. Am Ausgang des Blocks für den Signal-Range-Check 12 steht das Ergebnis des Signal-Range- Checks für den Luftmassenmesser SRC bereit.
Der Signal-Range-Check des vom Sensor gelieferten Meßwertes für den Luftmassenstrom wird jedoch nur durchgeführt, wenn nicht zuvor ein Fehler in der Referenzspannungsversorgung erkannt wurde. Im Fehlerpfad Signal- Range-Check 11 für die Erkennung eines Fehlers in der Referenzspannungsversorgung können Fehler wie Kabelabfall, Kurzschluß nach Masse und Kurzschluß zur Versorgungsspannung erkannt werden. Zusätzlich wird der Fall, daß die Referenzspannung einen Kurzschluß nach Batteriespannung hat, abgedeckt. Dazu wird ein Standard-Signal-Range- Check für die Referenzspannung durchgeführt. Dies erfolgt entweder über den Treiberbaustein selbst oder durch die separate Erfassung der Ausgangsspannung des Treiberbausteins. Sofern ein Fehler erkannt wird, wird dies dem Block 12 über die Verbindung zwischen 11 und 12 mitgeteilt und der eigentliche Signal-Range-Check für das Sensorausgangssignal unterbleibt.
Weiterhin ist in Figur 1 ein Block 13 angegeben, in dem das Ausgangssignal des Luftmassenmessers bzw. der Meßwert MW für den Luftmassenstrom durch die Drehzahl des Motors dividiert wird. Das dabei entstehende Ergebnis stellt die eigentliche Luftmasse LM dar. Zur Durchführung der Division durch die Drehzahl wird die Drehzahl n, die dem Steuergerät üblicherweise immer vorliegt, dem Block 13 zugeführt. Im Block 14 wird die Luftmasse LM einer Normierung unterworfen, wobei diese Normierung bei Ladedruckerfassung durchgeführt wird. Dem Block 14 wird dazu zum einen der Ladedruck LD und zum anderen die Lufttemperatur LT zugeführt, diese Größen werden mittels zugehöriger Sensoren ermittelt.
Die Plausibilitätsuntersuchung für das normierte Luftmassensignal LMN läuft im Block 15 ab. Dazu wird dem Block 15 die normierte Luftmasse LMN sowie die Drehzahl n zugeführt. Zusätzlich werden die Ergebnisse des Fehlerpfades des Luftsystems 10, des Fehlerpfades Signal-Range-Check-Referenzspannung 11 sowie das Ergebnis des Signal-Range-Checks in Block 12 dem Block 15 zugeführt. Durch Auswertung dieser Größen wird durch Plausibilitätsuntersuchungen eine Onboard-Diagnose für den Luftmassenmesser realisiert. Das Ergebnis steht als Signal OBDLMM zur Verfügung.

Je nach Ergebnis der einzelnen Untersuchungen wird für die weiteren Berechnungen im Steuergerät als gültige Luftmasse ein Wert verwendet, der mittels einer Umschaltung 16 ausgewählt wird. Mit dieser Umschaltung, die drei Einzelumschaltmittel a, b und c umfaßt, kann entweder die aus dem Ausgangssignal des Sensors berechnete Luftmasse LM oder ein Vorgabewert für die Luftmasse VLLM für die weitere Auswertung zur Verfügung gestellt werden. Ob der Vorgabewert für die Luftmasse oder der berechnete Wert VL als aktuelle Luftmasse weitergeleitet wird hängt von den Ergebnissen der einzelnen Fehler oder Plausibilitätsuntersuchungen bzw. vom Ergebnis der Signal-Range-Checks ab, gemäß derer die Umschaltungen der Umschaltmittel a, b oder c vorgenommen werden. Ein Fehler im Fehlerpfad 11 schaltet dabei über das Umschaltmittel a direkt auf den Vorgabewert VLLM . Ein Fehler im Signal-Range-Check 12 schaltet über b auf den Vorgabewert und eine erkannte Nichtplausibilität im Block 15 bewirkt ein Umschalten auf den Vorgabewert VLLM über das Umschaltmittel c. Bei dem Vorgabewert VLMM kann es sich beispielsweise auch um einen vom Steuergerät aus verschiedenen Meßgrößen abgeschätzten Wert handeln.

Da der Signal-Range-Check 12 nur bei bestimmten vorgebbaren Betriebszuständen des Motors durchgeführt wird, ist die Umschaltung über das Schaltmittel b auf den Vorgabewert VLLM nicht möglich, wenn kein Signal-Range-Check durchgeführt wird, d.h, es wird hier immer die gemessene Luftmasse LM zur weiteren Verarbeitung weitergeleitet, wenn kein Signal-Range-Check erfolgt.

Bei der Durchführung der einzelnen Signal-Range-Checks können auch gewisse Zeitbedingungen berücksichtigt werden. Im einzelnen laufen die Signal-Range-Checks dann nach folgenden Verfahren ab:

1. Signal-Range-Check low

Ein Fehler liegt vor, wenn die Drehzahl innerhalb des für den Signal-Range-Check zulässigen Bereiches liegt, wenn also gilt daß die Drehzahl zwischen einem minimalen Wert nSRCmin und einem maximalen Wert nSRCmax liegt und gleichzeitig die Luftmasse LM kleiner ist als ein Minimalwert für die Luftmasse LMSRCmin, bei dem ein Signal-Range-Check noch durchgeführt werden darf. Wenn ein solcher Fehler vorliegt, wird das Sensorsignal weiter auf seine Gültigkeit hin kontrolliert und der Meßwert wird weitergegeben. Bleibt der Sensor für eine vorgebbare Zeit defekt, die länger ist als ein Grenzwert, so wird der Sensor als endgültig defekt abgespeichert und die Ersatzfunktionen werden aktiviert. Das Sensorsignal wird dann weiterhin auf seine Gültigkeit analysiert.

Der Sensor gilt als geheilt, bzw. als intakt, wenn die Drehzahl in einem für den Signal-Range-Check zulässigen Bereich liegt, also gilt, daß $nSRCmin \leq n \leq nSRCmax$ und für eine Zeit, die größer als ein Grenzwert ist $t > tHFMSRCOK$, gilt, daß die Luftmasse größer ist als eine bei gültigem Signal-Range-Check als zulässig eingestufte minimale Luftmasse $LM > LMSRCmin$ und wenn kein anderer Signal-Range-Check-Fehler am Luftmassenmesser aufgetreten ist. Die Ersatzfunktionen werden wieder zurückgenommen, wenn der Sensor als geheilt erkannt wird.

2. Signal-Range-Check high

Die Signal-Range-Check High-Prüfung ist dann aktiv, wenn für eine Mindestzeit TSRCakt bei aktueller Drehzahl die Einspritzmenge MES, die als Summe aus Wunschmenge und vom Leerlaufregler berechneter Menge definiert ist, unter einer drehzahlabhängigen Grenze liegt. Diese Maßnahme führt zu einer Einschränkung des Signal-Range-Checks auf Betriebspunkte mit begrenzter Drehzahl und begrenztem Ladedruck.

Ein Fehler liegt vor, wenn bei aktivem Signal-Range-Check gilt, daß die Luftmasse größer ist als der Maximalwert bei erlaubtem Signal-Range-Check $LM > LMSRCmax$. Das Sensorsignal wird dann weiter auf seine Gültigkeit hin kontrolliert und der Meßwert dennoch weitergegeben, d.h. der Meßwert wird für weitere Berechnungen zur Verfügung gestellt. Alternativ wird der letzte gültige Wert beibehalten und weitergegeben.

Bleibt der Sensor bei aktivem Singal-Range-Check für eine vorgebbare Zeit $t > tHFM$ defekt, so wird er als endgültig defekt abgespeichert und die Ersatzfunktion wird aktiviert. Das Sensorsignal wird weiterhin auf seine Gültigkeit analysiert. Der Sensor gilt als geheilt bzw. als intakt, wenn bei aktivem Signal-Range-Check für eine weitere Zeit $t > tHFMOK$ gilt, daß die Luftmasse kleiner ist als der Maximalwert bei erlaubtem Singal-Range-Check $LM < LMSRCmax$ und wenn weiterhin kein anderer Signal-Range-Check-Fehler am Luftmassenmesser erkannt wurde. Die Ersatzfunktionen werden dann wieder zurückgenommen wenn der Sensor als geheilt erkannt wird. Bei nicht aktivem Signal-Range-Check wird auch kein Fehler an das Steuergerät weitergegeben. Existierende Fehler können bei nicht aktivem Signal-Range-Check nicht geheilt werden.

In Figur 2 ist eine weitere Ausführungsform der Erfindung dargestellt. Dabei wird im Signal-Range-Check wird die Sensorausgangsspannung ULMM daraufhin überprüft, ob sie innerhalb eines zulässigen Bereiches liegt oder nicht. Dazu wird die Sensorspannung ULMM im Vergleicher 17 mit einem Maximalwert für die Luftmasse LMMMAX verglichen und im Vergleicher 18 wird die Sensorausgangsspannung mit einem Minimalwert der Luftmasse LMMMIN verglichen. Die beiden Vergleicher 17 und 18 stehen mit vier UND-Gattern 19, 20, 21 und 22 in Verbindung, denen zusätzlich noch die Bedingung zugeführt wird, ob überhaupt eine Fehlererkennung mittels Signal-Range-Check durchgeführt werden soll oder nicht.

Die Bedingung daß eine Fehlererkennung mittels Signal-Range-Check erfolgen soll, wird mit Hilfe der drei Vergleicher 25, 26 und 27 sowie des UND-Gatters 28 gebildet. Dabei wird davon ausgegangen, daß außerhalb eines Drehzahlfensters und oberhalb einer Mengenschwelle der Signal-Range-Check abgeschaltet werden muß, da irrtümliche Fehlererkennungen stattfinden könnten. Zur Festlegung des Fensters für den Signal-Range-Check wird in den Vergleichern ein erster Drehzahlwert N1 mit einem Drehzahlmittelwert NMIT verglichen. Ein zweiter Vergleich findet statt, indem ein Drehzahlwert N2 mit dem Mittelwert NMIT verglichen wird und in einem dritten Vergleich wird geprüft, ob die Summe der gewünschten Kraftstoffmenge GKM und der vom Leerlaufregler berechneten Kraftstoffmenge BKM unterhalb eines drehzahlabhängigen Wertes liegt.

Nur wenn alle Bedingungen:

$N1 \leq NMIT \leq N2$ und $GKM + BKM \leq ME$

erfüllt sind, wird eine Fehlererkennung SRC erlaubt. Das dann am Ausgang des UND-Gatters 28 liegende Signal wird dann den UND-Gattern 19 bis 22 zugeführt, am Ausgang des Inverters 29 wird das Signal Stop Fehlererkennung SRC abgegeben.

Im SRC werden in vereinfachter Form folgende Überprüfungen durchgeführt:

Ist die Sensorspannung größer als der Maximalwert der Luftmasse und soll ein Signal-Range-Check durchgeführt werden, wird erkannt, daß das Signal in Ordnung ist (SRC high OK). Ist eine dieser beiden Bedingungen nicht erfüllt, wird auf (SRC high defekt) erkannt. Dasselbe gilt für die Minimalwerte der Luftmasse, wobei dann erkannt wird (SRC low OK) oder (SRC low defekt).

Unabhängig davon, ob eine Signal-Range-Check durchgeführt wird oder nicht wird die Sensorausgangsspannung ULMM weiterverarbeitet, d.h. aus der Sensorspannung ULMM wird die Luftmasse LMM berechnet, auch wenn im Signal-Range-Check ein Fehler erkannt wurde, sofern bestimmte Bedingungen, die einen Signal-Range-Check erlauben, nicht erfüllt sind. Die Luftmasse LMM wird dann also unbegrenzt aus der Sensorspannung ULMM berechnet, dies gilt innerhalb und außerhalb des Überwachungsbereichs des Signal-Range-Checks. Bei erkanntem Fehler in einem Betriebsbereich des Motors, der einen Signal-Range-Check zuläßt,(vorläufig oder endgültig), wird zur Berechnung der Luftmasse der letzte als gültig abgespeicherte Wert der Sensorspannung ULMMA verwendet. Dieser Wert ULMMA ist im Speicher 23 vorhanden, wobei in den Speicher 23 jeweils die aktuellste Sensorausgangsspannung eingeschrieben wird. Der Wert ULMMA wird jeweils aus der Sensorspannung ULMM unter Berücksichtigung der Luftmassenmesser (LMM)-Kennlinie gebildet. Die Umschaltung auf den abgespeicherten Ersatzwert bzw. Vorgabewert erfolgt über das Schaltmittel 24, das bei in Block 30 erkanntem Fehler umgeschaltet wird.

Mit der in Figur 2 dargestellten Anordnung zur Durchführung des erfindungsgemäßen Signal-Range-Checks lassen sich die gewünschten Überprüfungen durchführen, dabei ist unerheblich, ob die Anordnung nach Figur 2 als Hardware realisiert ist oder als Verfahren im Mikroprozessor des Steuergerätes abläuft.

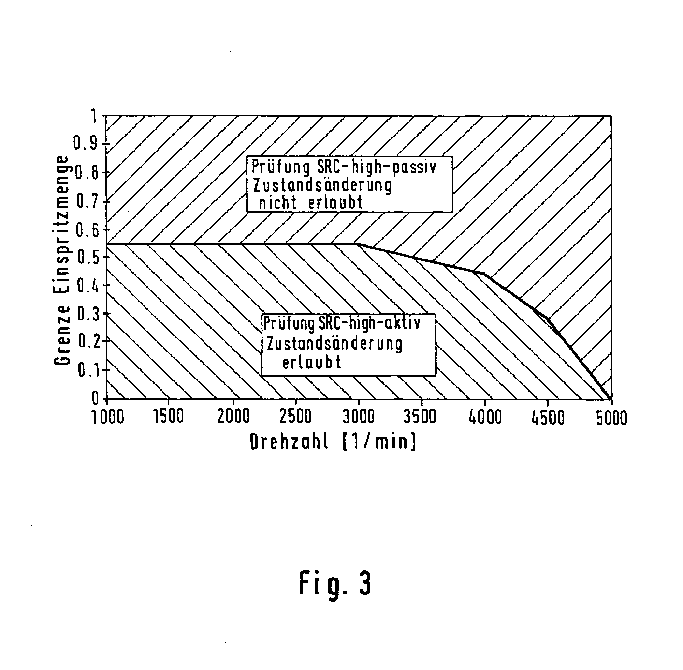

In Figur 3 sind die Bedingungen, die einen Signal-Range-Check high erlauben oder nicht erlauben, erkennbar. Im einzelnen ist in Figur 3 die Grenze für die Einspritzmenge über der Drehzahl dargestellt. Im oberen Bereich ist die Prüfung des Signal-Range-Checks high passiv, eine Zustandsänderung ist nicht erlaubt. Im unteren Teil der Figur 3 ist die Prüfung Signal-Range-Check-high aktiv und eine Zustandsänderung erlaubt. In beiden Bereichen wird, sofern der durchgeführte SRC keinen Fehler erkennen läßt, der Meßwert verarbeitet.

Die Bedingungen, die einen Signal-Range-Check-low erlauben sind in der Figur 3 nicht dargestellt. Der SRC-low ist erst oberhalb einer Mindestdrehzahl zulässig und nur dann, wenn eine gegebenenfalls im Fahrzeug verbaute (Abstell)Drosselklappe nicht geschlossen ist.

Die im Block 15 des Ausführungsbeispiels nach Figur 1 ablaufenden Plausibilitätsuntersuchungen, die als Onboard-Diagnose (OBD) im Steuergerät der Brennkraftmaschine während des normalen Betriebes ablaufen, werden nun näher beschrieben. Für eine Plausibilitätsprüfung sind Testmöglichkeiten für eine Offset- und eine Empfindlichkeitsdrift vorzusehen. Die Plausibilitätsprüfung ist nur dann aktiv, wenn kein Signal-Range-Check-Fehler der Referenzspannung für den Sensor sowie für das Sensorsignal selbst vorliegt. Ebenso kann eine Plausibilitätsverletzung nur dann geheilt werden, wenn kein Signal-Range-Check-Fehler der Referenzspannung für den Sensor und für das Sensorsignal vorliegt. Die Plausibilitätsprüfung umfaßt verschiedene Prüfungen, von denen zwei nachstehend näher beschrieben werden.

Plausibilitätsprüfung der Offset-Drift

Bei dieser Plausibilitätsprüfung, die beispielsweise für einen Heißfilmluftmassenmesser durchgeführt wird, wird unterschieden, zwischen Offsetdrift low und Offsetdrift high. Bei der Plausibilitätsprüfung Offsetdrift high wird ein Fehler erkannt, wenn die Ausgangsspannung des Sensors bei Drehzahl Null, also die Offsetspannung größer ist als eine vorgebbare erste Schwelle, die einen möglichen Maximalwert darstellt. Bei der Plausibilitätsprüfung Offsetdrift low wird ein Fehler erkannt, wenn die Ausgangsspannung des Sensors bei Drehzahl Null kleiner ist als eine vorgebbare zweite Schwelle, die einen plausiblen Minimalwert darstellt. Die Plausibilitätsprüfung der Offset-Drift wird zu Beginn der Inbetriebnahme der Brennkraftmaschine, sobald erkannt wird, dass ein "Zündung ein"- Signal vorliegt oder während der Startphase oder während des Nachlaufs des Steuergerätes, also bei einer Drehzahl Null, durchgeführt. Da keine Luft strömt, gibt der Sensor als Ausgangsspannung lediglich eine Offsetspannung ab. Diese Ausgangsspannung des Sensors wird in einem vorgebbaren Abtastraster auf einen bestimmten Spannungsbereich kontrolliert. Beispielsweise wird in einem 20 ms-Raster bei einer Drehzahl n = 0 überprüft, ob die Bedingung:

UOBD,min < +Ua < UOBD,max

erfüllt ist. Die Plausibilität der Luftmassenerfassung ist demnach verletzt, wenn die Ausgangsspannung Ua des Sensors bei Drehzahl Null das vorgegebene Spannungsfenster, das begrenzt wird von einem Minimalwert UOBD,min und einem Maximalwert UOBD,max, verläßt. Das Sensorsignal wird dann aber weiter auf Plausibilität kontrolliert und der jeweils erhaltene Meßwert wird weitergegeben, der Sensor wird als vorläufig defekt angenommen. Bleibt der Sensor für eine vorgebbare Zeit t > tOBDDEF defekt, so wird die Plausibilitätsverletzung als endgültig erkannt und abgespeichert und es werden die üblicherweise vorhandenen Ersatzfunktionen aktiviert. Das Sensorsignal selbst wird dabei aber weiterhin auf seine Gültigkeit analysiert, damit eine gegebenenfalls auftretende Fehlerheilung erkannt werden kann. Eine solche Fehlerheilung wird erkannt, bzw. die zu überprüfende Plausibilität gilt als geheilt, wenn für eine weitere vorgebbare Zeit t > tOBDOK die beiden folgenden Bedingungen erfüllt sind:

bei Drehzahl n = 0: UOBD, min < +Ua < UOBD, max

bei Drehzahl n > 0: keine Plausibilitätsverletzung

Die Ersatzfunktionen werden jeweils wieder zurückgenommen, wenn die Plausibilität als geheilt erkannt wurde.

Plausibilitätsprüfung der Empfindlichkeitsdrift

Neben der Offset-Drift sollte auch die Empfindlichkeitsdrift auf Plausibilität überwacht werden. Die Empfindlichkeitsdrift beim Luftmassenmesser wird ausschließlich bei geschlossenem Abgasrückführventil und als intakt erkanntem Luftmassensystem auf Plausibilität geprüft. Dass das Abgasrückventil geschlossen ist, ist eine Information, die im Steuergerät gegebenenfalls vorliegt. Bei Systemen mit Ladedruckfühler (LDF) und Temperaturfühler (TF) nach dem Ladeluftkühler (LLK) kann das Signal des Luftmassenmessers mit einem über die allgemeine Gasgleichung berechnete Ersatzwert verglichen werden. Es gilt folgender Zusammenhang:

ML . TL/pL = konstant,

wobei ML die Luftmasse, TL die mittels eines Temperatursensors gemessene Temperatur der Ansaugluft nach dem Ladeluftkühler und pL der mittels eines Drucksensors gemessene Ladedruck ist. Damit kann die bei einer Temperatur TL und einem Ladedruck pL bestimmmte Luftmasse auf Normalbedingungen TL0, pL0 normiert werden. Der normierte Wert wird dann mit einer Fensterfunktion hinsichtlich eines oberen und eines unteren plausiblen Grenzwertes überwacht.

Es gelten folgende Zusammenhänge:

$$ML0 = ML(TL, pL) \cdot TL \cdot pL0/pL \cdot TL0 \qquad (1)$$

mit : nOBD,min $\leq$ n $\leq$ nOBD,max

und: ME,OBD,min < ME,Sum < ME,OBD,max.

Die Plausibilität der Luftmassenerfassung ist verletzt, wenn die ermittelte normierte Luftmasse das vorgegebene Fenster verläßt. Das Sensorsignal wird dann weiter auf Plausibilität kontrolliert und der Meßwert wird in jedem Fall weitergegeben. Bleibt der Sensor für eine vorgebbare Zeit t > tHFM, D defekt, so wird die Plausibilitätsverletzung als endgültig abgespeichert und die Ersatzfunktionen werden aktiviert. Das Sensorsignal wird weiterhin auf seine Gültigkeit analysiert und die Plausibilität gilt als geheilt, wenn für eine Zeit t > tHFMOK und für nOBD,min die vorherige Bedingung erfüllt ist. Die ermittelte normierte Luftmasse liegt dann in dem erwähnten Luftmassenbereich. Die Ersatzfunktionen werden dann wieder zurückgenommen, wenn die Plausibilität als geheilt erkannt wurde.

Bei Systemen, bei denen eine Temperaturfühler und/oder ein Ladedruckfühler nicht vorhanden ist, wird stattdessen auf einen Ersatzwert TL,Ers bzw. pL,Ers zurückgegriffen. Der eingesetzte Ersatzwert wird dabei applikativ festgelegt.

In einer Ergänzung zur Plausibilitätsuntersuchung der Empfindlichkeitsdrift des Sensors wird die gemessene Luftmasse pro Zeit ins Verhältnis gesetzt mit der über die Gasgleichung gerechneten normierten Luftmasse. Dieses Verhältnis wird auf ein unteres und oberes Grenzverhältnis überprüft und bei Unter- bzw. Überschreitung der Plausibilitätsfehler "Empfindlichkeitsdrift low" bzw. "Empfindlichkeitsdrift high" gemeldet.

# EP 1 242 739 B1

**Patentansprüche**

1. Verfahren zur Erkennung einer Fehlfunktion bei einem Heissfilmluftmassenmesser einer Brennkraftmaschine, dessen Ausgangssignal in einer Auswerteeinrichtung verarbeitet und einem Signal-Range-Check mit Vergleich mit wenigstens einem vorgebbaren Grenzwert unterworfen wird und eine Fehlfunktion erkannt wird, wenn das Ausgangssignal vom Grenzwert in vorgebbarer Weise abweicht, wobei der Signal-Range-Check nur innerhalb eines vorgebbaren Bereiches von Betriebszuständen der Brennkraftmaschine durchgeführt wird und das Ausgangssignal des Sensors als Messgröße auch dann weiterverarbeitet wird, wenn die Betriebszustände der Brennkraftmaschine nicht innerhalb des vorgebbaren Bereiches liegen, **dadurch gekennzeichnet, dass** das Ausgangssignal des Sensors auch für die Berechnung der Messgröße berücksichtigt wird, wenn die Messgröße nicht innerhalb eines vorgebbaren Bereiches liegt zusätzlich eine Plausibilitätsprüfung hinsichtlich der Offsetdrift vorgenommen wird und ein Fehler erkannt wird, wenn das Ausgangssignal des Sensors bei der Drehzahl Null kleiner ist als eine vorgebbare Schwelle.

2. Verfahren zur Erkennung einer Fehlfunktion nach Anspruch 1, **dadurch gekennzeichnet, dass** der Heissfilmluftmassenmesser die von einer Brennkraftmaschine angesaugte Luftmasse misst und dass der Signal-Range-Check und die Weiterverarbeitung der Messgröße im Steuergerät der Brennkraftmaschine erfolgen.

3. Verfahren zur Erkennung einer Fehlfunktion nach Anspruch 1 oder 2 **dadurch gekennzeichnet, daß** der vorgebbare Bereich der Meßgröße in Abhängigkeit von der Drehzahl der Brennkraftmaschine gebildet wird.

4. Verfahren zur Erkennung einer Fehlfunktion nach Anspruch 1 oder 2 **dadurch gekennzeichnet, daß** der vorgebbare Bereich in Abhängigkeit von der Einspritzmenge und/oder von einer Kombination aus Drehzahl und Einspritzmenge gebildet wird.

5. Verfahren zur Erkennung einer Fehlfunktion nach Anspruch 3 oder 4, **dadurch gekennzeichnet, daß** der Signal-Range-Check nur dann durchgeführt wird, wenn die Grenze der Einspritzmenge unterhalb einer vorgebbaren Größe liegt, wobei diese Größe drehzahlabhängig ist und mit steigender Drehzahl verringert wird.

6. Verfahren zur Erkennung einer Fehlfunktion nach einem der vorhergehenden Ansprüche, **dadurch gekennzeichnet, daß** sowohl ein Signal-Range-Check high als auch ein Signal-Range-Check low durchgeführt wird und eine Fehlererkennung beim Signal-Range-Check-low erfolgt, wenn die Meßgröße kleiner ist als ein vorgebbarer Minimalwert und beim Signal-Range-Check-high ein Fehler erkannt wird, wenn die Meßgröße größer ist als ein vorgebbarer maximaler Wert.

7. Verfahren zur Erkennung einer Fehlfunktion nach einem der vorhergehenden Ansprüche, **dadurch gekennzeichnet, daß** bei einem erkannten Fehler innerhalb des erlaubten Bereiches für die Signalverarbeitung auf einen zuvor als richtig anerkannten Wert zurückgegriffen wird und dieser Wert als Ersatzwert für weitere Berechnungen zur Verfügung steht.

8. Verfahren zur Erkennung einer Fehlfunktion nach einem der vorhergehenden Ansprüche, **dadurch gekennzeichnet, daß** zusätzlich zum Signal-Range-Check eine Plausibilitätsüberprüfung erfolgt, jedoch nur dann, wenn der Signal-Range-Check keinen Fehler erkennen läßt und diese zusätzliche Plausibilitätsprüfung eine Prüfung einer Offset-Drift und/oder eine Prüfung einer Empfindlichkeitsdrift umfaßt, bei der in vorgebbaren Betriebsphasen der Brennkraftmaschine, die einer Drehzahl von etwa Null entsprechen, weitere Bedingungen, insbesonders Spannungsbedingungen überwacht werden.

9. Verfahren zur Erkennung einer Fehlfunktion nach Anspruch 8, **dadurch gekennzeichnet, daß** die Plausibilitätsprüfung der Offsetdrift derart erfolgt, daß überprüft wird, ob die Ausgangsspannung Ua des Sensors größer ist als ein unterer Grenzwert UOBD,min und/oder kleiner ist als ein oberer Grenzwert UOBD,max und bei Nichterfüllen dieser Bedingung auf einen Fehler der Offsetdrift erkannt und angezeigt wird.

10. Verfahren zur Erkennung einer Fehlfunktion nach Anspruch 8, **dadurch gekennzeichnet, daß** die Plausibilitätsprüfung der Epfindlichkeitsdrift bei geschlossenem Abgasrückführventil und intaktem Luftmassensystem durchgeführt wird, daß die erfaßte Luftmasse auf Normalbedingungen normiert wird und die normierte Luftmasse mit wenigstens einem Ersatzwert verglichen wird, der über die allgemeine Gasgleichung berechnet wird und bei einer vorgebbaren Abweichung auf eine zu große Empfindlichkeitsdrift erkannt wird und daß ein entsprechender Fehler angezeigt wird und gegebenenfalls Ersatzmaßnahmen eingeleitet werden.

7

**11.** Verfahren zur Erkennung einer Fehlfunktion nach Anspruch 10, **dadurch gekennzeichnet, daß** bei der Plausibilitätsprüfung der Epfindlichkeitsdrift ein Vergleich mit einem oberen und/oder unteren Ersatzwert MEOBD,max, MEOBD,min erfolgt und bei vorgebbarer Abweichung eine Nichtplausibilität erkannt wird.

**12.** Verfahren zur Erkennung einer Fehlfunktion nach einem der vorhergehenden Ansprüche 8 bis 11, **dadurch gekennzeichnet, daß** die Plausibilitätsprüfung nach einer Fehlererkennung für eine vorgebbare Zeit fortgesetzt wird und erst nach Ablauf dieser Zeit, bei weiterhin herrschender Nichtplausibilität auf einen endgültigen Defekt erkannt wird und eine Ersatzfunktion aktiviert wird.

**13.** Verfahren zur Erkennung einer Fehlfunktion nach einem der vorhergehenden Ansprüche 8 bis 12, **dadurch gekennzeichnet, daß** die Plausibilitätsprüfung nach einer Fehlererkennung für eine vorgebbare Zeit fortgesetzt wird und bei dann erkannter Plausibilität eine Fehlerheilung angenommen wird.

**14.** Vorrichtung zur Durchführung eines Verfahrens zur Erkennung einer Fehlfunktion nach einem der vorhergehenden Ansprüche, **dadurch gekennzeichnet, daß** sie wenigstens ein, einen Mikroprozessor umfassendes Steuergerät aufweist, dem die zu Durchführung der Verfahren erforderlichen Größen zugeführt werden und das Mittel umfaßt die die Schritte gemäss einem der Ansprüche 1-13 durch führen und die bei erkannter Fehlfunktion die erforderlichen Maßnahmen auslösen und Ersatzfunktionen aktivieren.

**Claims**

**1.** Method for detecting a malfunction in a hot-film air mass flow rate meter of an internal combustion engine, the output signal of which meter is processed in an evaluation device and subjected to a signal range check with comparison with at least one predefinable limiting value, and a malfunction is detected if the output signal deviates from the limiting value in a predefinable fashion, the signal range check being carried out only within a predefinable range of operating states of the internal combustion engine, and the output signal of the sensor being further processed as a measurement variable even if the operating states of the internal combustion engine do not lie within the predefinable range, **characterized in that** the output signal of the sensor is also taken into account for the calculation of the measurement variable if the measurement variable does not lie within a predefinable range, and in addition a plausibility check with respect to the offset drift is performed and a fault is detected if the output signal of the sensor is smaller at the zero rotational speed than with a predefinable threshold.

**2.** Method for detecting a malfunction according to Claim 1, **characterized in that** the hot-film air mass flow rate meter measures the air mass flow rate sucked in by an internal combustion engine, and **in that** the signal range check and the further processing of the measurement variable occur in the control device of the internal combustion engine.

**3.** Method for detecting a malfunction according to Claim 1 or 2, **characterized in that** the predefinable range of the measurement variable is formed as a function of the rotational speed of the internal combustion engine.

**4.** Method for detecting a malfunction according to Claim 1 or 2, **characterized in that** the predefinable range is formed as a function of the injection quantity and/or of a combination of the rotational speed and injection quantity.

**5.** Method for detecting a malfunction according to Claim 3 or 4, **characterized in that** the signal range check is carried out only if the limit of the injection quantity lies below a predefinable value, this value being dependent on the rotational speed and being reduced as the rotational speed increases.

**6.** Method for detecting a malfunction according to one of the preceding claims, **characterized in that** both a signal range check high and a signal range check low are carried out and fault detection is carried out at the signal range check low if the measurement variable is smaller than a predefinable minimum value, and a fault is detected at the signal range check high if the measurement variable is larger than a predefinable maximum value.

**7.** Method for detecting a malfunction according to one of the preceding claims, **characterized in that** when a fault is detected within the permitted range for the signal processing, there is recourse to a value which is acknowledged beforehand as correct, and this value is available as an equivalent value for further calculations.

**8.** Method for detecting a malfunction according to one of the preceding claims, **characterized in that**, in addition to the signal range check, a plausibility check is carried out, but only if the signal range check does not permit a fault to be detected and this additional plausibility check comprises checking of an offset drift and/or of a sensitivity drift during which further conditions, in particular voltage conditions, are monitored in predefinable operating phases of the internal combustion engine which correspond to a rotational speed of approximately zero.

9. Method for detecting a malfunction according to Claim 8, **characterized in that** the plausibility check of the offset drift takes place in such a way that checking is carried out to determine whether the output voltage Ua of the sensor is higher than a lower limiting value UOBD,min and/or lower than an upper limiting value UOBD,max, and when this condition is not fulfilled a fault in the offset drift is detected and displayed.

10. Method for detecting a malfunction according to Claim 8, **characterized in that** the plausibility checking of the sensitivity drift is carried out with the exhaust gas recycling valve closed and the air mass flow rate system intact, **in that** the sensed air mass flow rate is standardized to normal conditions and the standardized air mass flow rate is compared with at least one equivalent value which is calculated by means of the general gas equation, and when there is a predefinable deviation an excessively large sensitivity drift is detected, and **in that** a corresponding fault is displayed and, if appropriate, equivalent measures are initiated.

11. Method for detecting a malfunction according to Claim 10, **characterized in that** in the plausibility checking of the sensitivity drift a comparison is made with an upper equivalent value MEOBD,max and/or lower equivalent value MEOBD,min, and an implausibility is detected given a predefinable deviation.

12. Method for detecting a malfunction according to one of the preceding Claims 8 to 11, **characterized in that** the plausibility checking is continued after a fault detection for a predefinable time, and, only after this time has run out, with continued implausibility a definite defect is detected and an equivalent function is actuated.

13. Method for detecting a malfunction according to one of the preceding Claims 8 to 12, **characterized in that** the plausibility checking is continued for a predefinable time after a fault has been detected, and when plausibility is then detected, a fault recovery is assumed.

14. Device for carrying out a method for detecting a malfunction according to one of the preceding claims, **characterized in that** it has at least one control device which comprises a microprocessor onto which the variables which are necessary for carrying out the methods are fed and which comprises means which carry out the steps according to one of Claims 1 to 13 and which trigger the necessary measures and actuate equivalent functions when a malfunction is detected.

**Revendications**

1. Procédé de reconnaissance du fonctionnement défectueux d'un capteur de masse d'air à film chaud d'un moteur à combustion interne dont le signal de départ est traité dans une unité d'exploitation et est soumis à un contrôle de portée de signal avec comparaison avec au moins une valeur limite prédéterminable, selon lequel un fonctionnement défectueux est reconnu lorsque le signal de départ s'écarte de la valeur limite de manière prédéterminable, le contrôle de portée de signal étant réalisé seulement à l'intérieur d'une plage prédéterminable d'états de fonctionnement du moteur à combustion interne et le signal de départ du capteur faisant l'objet d'une poursuite du traitement en tant que grandeur de mesure même lorsque les états de fonctionnement du moteur à combustion interne ne se situent pas à l'intérieur de la plage prédéterminable,
**caractérisé en ce que**
le signal de départ du capteur est pris en compte également pour le calcul de la grandeur de mesure, un contrôle de plausibilité de la dérive de décalage est effectué lorsque la grandeur de mesure ne se situe pas à l'intérieur d'une plage prédéterminable et un défaut est reconnu si le signal de départ du capteur, à la vitesse de rotation zéro, est inférieur à un seuil prédéterminable.

2. Procédé de reconnaissance du fonctionnement défectueux selon la revendication 1,
**caractérisé en ce que**
le capteur de masse d'air à film chaud mesure la masse d'air aspirée par un moteur à combustion interne et le contrôle de portée de signal ainsi que la poursuite du traitement de la grandeur de mesure sont effectués dans l'appareil de commande du moteur à combustion interne.

3. Procédé de reconnaissance du fonctionnement défectueux selon la revendication 1 ou 2,

**caractérisé en ce que**
la plage prédéterminable de la grandeur de mesure est formée en fonction de la vitesse de rotation du moteur à combustion interne.

**4.** Procédé de reconnaissance du fonctionnement défectueux selon la revendication 1 ou 2,
**caractérisé en ce que**
la plage prédéterminable est formée en fonction de la dose d'injection et/ou d'une combinaison de la vitesse de rotation et de la dose d'injection.

**5.** Procédé de reconnaissance du fonctionnement défectueux selon la revendication 3 ou 4,
**caractérisé en ce que**
le contrôle de portée de signal est réalisé seulement lorsque la limite de la dose d'injection se situe en dessous d'une grandeur prédéterminable, cette grandeur dépendant de la vitesse de rotation et diminuant lorsque celle-ci augmente.

**6.** Procédé de reconnaissance du fonctionnement défectueux selon l'une des revendications précédentes,
**caractérisé en ce qu'**
on effectue un contrôle de portée de signal haut et un contrôle de portée de signal bas et une reconnaissance de défaut a lieu pendant le contrôle de portée de signal bas si la grandeur de mesure est inférieure à une valeur minimale prédéterminable et, pendant le contrôle de portée de signal haut, si la grandeur de mesure est supérieure à une valeur maximale prédéterminable.

**7.** Procédé de reconnaissance du fonctionnement défectueux selon l'une des revendications précédentes,
**caractérisé en ce que**
si un défaut est reconnu dans la plage permise, on prend pour le traitement du signal une valeur précédemment reconnue comme exacte et cette valeur est disponible en tant que valeur de remplacement pour d'autres calculs.

**8.** Procédé de reconnaissance du fonctionnement défectueux selon l'une des revendications précédentes,
**caractérisé en ce qu'**
un contrôle de plausibilité est effectué en plus du contrôle de portée de signal, mais seulement si le contrôle de portée de signal ne permet pas de reconnaître un défaut et ce contrôle de plausibilité comprend un contrôle d'une dérive de décalage et/ou un contrôle d'une dérive de sensibilité pendant lequel d'autres conditions, en particulier les conditions de tensions, sont surveillées durant des phases de fonctionnement prédéterminables du moteur à combustion interne qui correspondent à une vitesse de rotation d'approximativement zéro.

**9.** Procédé de reconnaissance du fonctionnement défectueux selon la revendication 8,
**caractérisé en ce que**
le contrôle de plausibilité de la dérive de décalage est réalisé de telle façon qu'on vérifie si la tension de sortie Ua du capteur est supérieure à une valeur limite inférieure UOBD,min et/ou inférieure à une valeur limite supérieure UOBD,max et, si cette condition n'est pas remplie, un défaut de la dérive de décalage est reconnu et affiché.

**10.** Procédé de reconnaissance du fonctionnement défectueux selon la revendication 8,
**caractérisé en ce que**
le contrôle de plausibilité de la dérive de sensibilité est réalisé avec la soupape de recyclage des gaz d'échappement fermée et le système de masse d'air intact, la masse d'air détectée est normalisée aux conditions normales et la masse d'air normalisée est comparée avec au moins une valeur de remplacement qui est calculée par l'équation générale de gaz et, à un écart prédéterminable, une trop grande dérive de sensibilité est reconnue et un défaut correspondant est affiché et, le cas échéant, des mesures de remplacement sont prises.

**11.** Procédé de reconnaissance du fonctionnement défectueux selon la revendication 10,
**caractérisé en ce que**
pendant le contrôle de plausibilité de la dérive de sensibilité, une comparaison est réalisée avec une valeur de remplacement supérieure et/ou inférieure MEOBD,max, MEOBD,min et, en cas d'écart prédéterminable, une non-plausibilité est reconnue.

**12.** Procédé de reconnaissance du fonctionnement défectueux selon l'une des revendications précédentes 8 à 11,
**caractérisé en ce que**
le contrôle de plausibilité se poursuit pendant un temps prédéterminable après une reconnaissance de défaut et c'est seulement à l'expiration de ce temps, si la non-plausibilité se maintient, qu'un défaut est définitivement reconnu et qu'une fonction de remplacement est activée.

13. Procédé de reconnaissance du fonctionnement défectueux selon l'une des revendications précédentes 8 à 12, **caractérisé en ce que**
le contrôle de plausibilité se poursuit pendant un temps prédéterminable après une reconnaissance de défaut et, si une plausibilité est reconnue, on admet qu'il y a remède au défaut.

14. Dispositif de réalisation d'un procédé de reconnaissance du fonctionnement défectueux selon l'une des revendications précédentes,
**caractérisé en ce qu'**
il présente au moins un appareil de commande comprenant un microprocesseur, auquel les grandeurs nécessaires à la réalisation du procédé sont amenées et comprenant des moyens qui exécutent les étapes selon l'une des revendications 1 à 13 et, si un fonctionnement défectueux est reconnu, déclenchent les mesures nécessaires et activent des fonctions de remplacement.

Fig. 1

Fig. 2

Fig. 3